(19) 

Europäisches
Patentamt
European
Patent Office
Office européen
des brevets

(11) **EP 2 554 605 A1**

(12) **EUROPEAN PATENT APPLICATION**
published in accordance with Art. 153(4) EPC

(43) Date of publication:
06.02.2013 Bulletin 2013/06

(51) Int Cl.:
*C08L 101/00* (2006.01)    *C08K 5/00* (2006.01)
*G02B 5/30* (2006.01)

(21) Application number: 11762826.3

(22) Date of filing: 29.03.2011

(86) International application number:
**PCT/JP2011/057753**

(87) International publication number:
**WO 2011/122602 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 30.03.2010 JP 2010079153

(71) Applicant: Hoya Corporation
**Tokyo 161-8525 (JP)**

(72) Inventors:
• **INABA, Tsuyoshi**
  **Tokyo 161-8525 (JP)**
• **YANAGITA, Hiroaki**
  **Tokyo 161-8525 (JP)**

(74) Representative: Albrecht, **Thomas**
**Kraus & Weisert**
**Patent- und Rechtsanwälte**
**Thomas-Wimmer-Ring 15**
**80539 München (DE)**

(54) **DICHROIC DYE-CONTAINING LIQUID, AND POLARIZER**

(57)    To provide a dichroic dye-containing liquid that is capable of preventing haze without decrease of adhesiveness of a polarizing layer, and a polarizer.

The dichroic dye-containing liquid contains (A) a dichroic dye and (B) a toughness-imparting agent, in which the dichroic dye (A) and the toughness-imparting agent (B) are dispersed or dissolved in an aqueous medium, and a solid content X (% by mass) of the toughness-imparting agent (B) based on the dichroic dye-containing liquid and a 100% modulus Y (MPa) of the toughness-imparting agent (B) satisfy relationships represented by the following expressions (1) and (2):

$$0.01 \leq X \leq 1.0 \qquad\qquad (1)$$

$$Y \geq 0.14X^{-1.5} \qquad\qquad (2)$$

and the polarizer contains a substrate having provided sequentially thereon an orientation layer and a polarizing layer, in which the polarizing layer containing a dichroic dye that is oriented and accumulated by using the dichroic dye-containing liquid.

## Description

[Technical Field]

The present invention relates to a dichroic dye-containing liquid and a polarizer, and more specifically, relates to a dichroic dye-containing liquid that is capable of preventing haze without decrease of adhesiveness of a polarizing layer, and a polarizer.

[Background Art]

In a production method of a polarizer, such a method has been known that uses a dye having dichroism and exhibits a liquid crystal phase in the form of an aqueous solution. For example, such a polarizer is proposed that has a polarizing layer and a protective layer on a surface of a transparent substrate and has an inorganic intermediate layer as an orientation film between the transparent substrate and the polarizing layer (see, for example, Patent Document 1). The inorganic intermediate layer is formed of silicon oxide, a metal oxide or a mixture thereof, and a vapor deposition film of the metal oxide is formed as an orientation film by vacuum deposition on the surface of the substrate, on which a dichroic dye is oriented and accumulated, thereby forming the polarizing layer.

In the case where the orientation film is formed only of an inorganic substance as in Patent Document 1, cracks may be formed in the polarizing layer in a heat treatment, which may cause a problem that fogging may occur in a polarizer of a lens or the like. Furthermore, a conventional polarizing layer is insufficient in adhesiveness.

[Related Art Document]

[Patent Document]

[Patent Document 1] JP-A-2008-527401

[Summary of the Invention]

[Problems to be solved by the Invention]

An object of the present invention is to provide a dichroic dye-containing liquid that is capable of preventing haze without decrease of adhesiveness of a polarizing layer, and a polarizer.

[Means for solving the Problems]

As a result of earnest investigations made by the present inventors for achieving the object, it has been found that the problems may be solved by adding a toughness-imparting agent to a dichroic dye. The present invention has been completed based on the knowledge.

The present invention relates to a dichroic dye-containing liquid containing (A) a dichroic dye and (B) a toughness-imparting agent, the dichroic dye (A) and the toughness-imparting agent (B) being dispersed or dissolved in an aqueous medium, and a solid content X (% by mass) of the toughness-imparting agent (B) based on the dichroic dye-containing liquid and a 100% modulus Y (MPa) of the toughness-imparting agent (B) satisfying relationships represented by the following expressions (1) and (2) :

$$0.01 \leq X \leq 1.0 \qquad\qquad (1)$$

$$Y \geq 0.14X^{-1.5} \qquad\qquad (2)$$

and a polarizer containing a substrate having provided sequentially thereon an orientation layer and a polarizing layer, the polarizing layer containing a dichroic dye that is oriented and accumulated by using the dichroic dye-containing liquid.

[Advantages of the Invention]

According to the present invention, a dichroic dye-containing liquid that is capable of preventing haze without decrease of adhesiveness of a polarizing layer, and a polarizer are provided.

[Brief Description of the Drawing]

[Fig. 1]

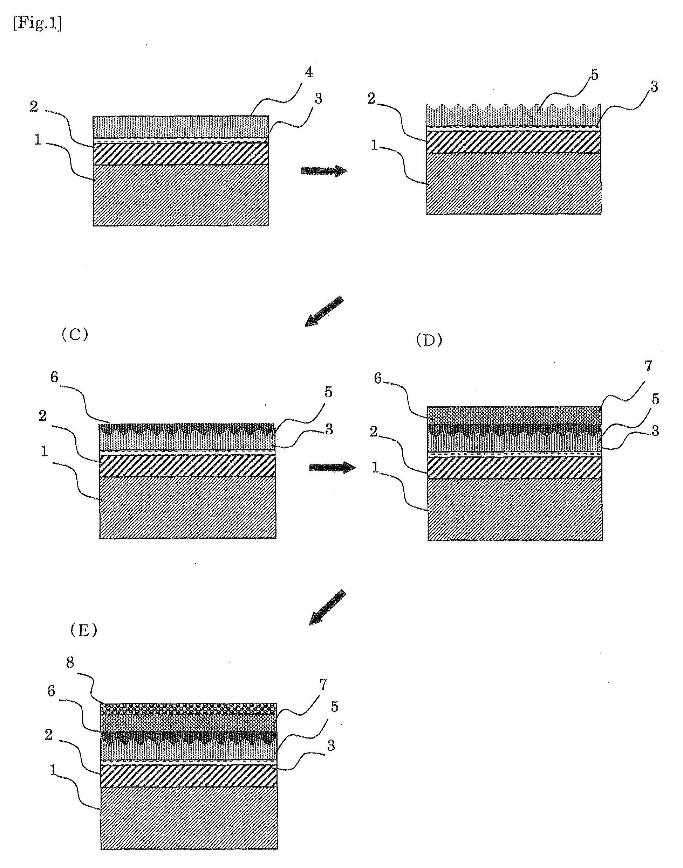

Fig. 1 is a schematic cross sectional view showing an example of a production process of a polarizer according to the present invention.

[Embodiments for carrying out the Invention]

The present invention will be described in detail below.
The dichroic dye-containing liquid of the present invention contains (A) a dichroic dye and (B) a toughness-imparting agent. The term "dichroism" herein means such a property that the color of transmitted light varies depending on the propagation direction thereof due to the anisotropy in selective absorption of the medium with respect to light, and a dichroic dye has such a property that large light absorption is obtained in the particular direction of the dye molecules with respect to polarized light, and small light absorption is obtained in the direction perpendicular thereto. Such a one has been known among the dichroic dyes that exhibits a liquid crystal state within certain concentration and temperature ranges in water as a solvent. The liquid crystal state is referred to as a lyotropic liquid crystal. When dye molecules are oriented in one particular direction by means of the liquid crystal state of the dichroic dye, the resulting device has anisotropy in light absorption and can function as a polarizer.
The dichroic dye used in the present invention is not particularly limited, and any one that has been ordinarily used in polarizers may be used. Examples thereof include an azo series, an anthraquinone series, a merocyanine series, a styryl series, an azomethine series, a quinone series, a quinophthalone series, a perylene series, an indigo series, a tetrazine series, a stilbene series and a benzidine series. Examples thereof also include those disclosed in U.S. Patent No. 2,400,877 and JP-A-2002-527786. The dichroic dyes (A) may be used solely or as a combination of two or more kinds thereof.
An aqueous solution or a suspension (preferably an aqueous solution) containing the dichroic dye may contain a dye or the like other than the above in such a range that does not impair the advantages of the present invention, and thereby a polarizer having an intended color may be produced. The dichroic dye-containing liquid of the present invention may contain an additive, such as a rheology modifier, an adhesion enhancer, a plasticizer and a leveling agent, depending on necessity in view of enhancing the coating property and the like.

Toughness-imparting Agent

The dichroic dye-containing liquid of the present invention contains (B) a toughness-imparting agent for preventing cracks from occurring in a heat treatment. The term "toughness" herein means resistance against progress (difficulty in progress) of cracks.
The toughness-imparting agent (B) used in the present invention is not particularly limited as far as it satisfies the expression (2) described later, and is preferably a water dispersible or water soluble resin, specific examples of which include an acrylic resin, such as a silicone-modified acrylic resin and an ethylene-acrylic acid copolymer resin (for example, Rikabond ET-8, a trade name, produced by CSC Co. , Ltd.), a polyolefin resin, such as a carboxyl-modified polyolefin resin (for example, Fine Resin SG-2000, a trade name, produced by Namariichi Co., Ltd.), a linear epoxy resin, such as a glycidyl ether type linear epoxy resin, and a polyurethane resin, such as a polycarbonate-modified polyurethane resin (for example, Evafanol HA-50C, a trade name, produced by Nicca Chemical Co. Ltd. , and Hydran WLS-213, a trade name, produced by DIC Corporation), an ester/acrylic-modified polyurethane resin (for example, Neostecker 400, Neostecker 700 and Neostecker 1200, trade names, produced by Nicca Chemical Co. Ltd.), an ether-modified polyurethane resin (for example, Evafanol HA-15, a trade name, produced by Nicca Chemical Co. Ltd.), an ester-modified polyurethane resin (for example, Neostecker 1700, a trade name, produced by Nicca Chemical Co. Ltd.), a polyurethane-series ionomer resin, and an inorganic hybrid polyurethane resin (for example, Patelacol RBS, a trade name, produced by DIC Corporation). Among these, a polycarbonate-modified polyurethane resin is preferred from the standpoint of the heat resistance. The toughness-imparting agent (B) may be used solely or as a combination of two or more kinds thereof.
The solid content of the toughness-imparting agent (B) with respect to the dichroic dye-containing liquid is from 0.01 to 1.0% by mass. when the solid content of the toughness-imparting agent (B) is larger than 1.0% by mass, the toughness-imparting agent becomes dominant, and the haze is increased. When the content thereof is less than 0.01% by mass, cracks are not prevented, and the haze is increased. In view of this point, the solid content of the component (B) is preferably from 0.01 to 0.5% by mass, and more preferably from 0.05 to 0.3% by mass.

The preparation method of the dichroic dye-containing liquid of the present invention is not particularly limited, and may be prepared in such a manner that the dichroic dye (A), the toughness-imparting agent (B), and an additive and the like, which may be used depending on necessity, are weighed in prescribed amounts and agitated sufficiently, and the components (A) and (B) are dispersed or dissolved in an aqueous medium. The order of addition of the components is not particularly limited. The dichroic dye-containing liquid of the present invention may be an aqueous solution or a suspension in water, and is preferably an aqueous solution for preventing the haze.

It is necessary in the dichroic dye-containing liquid of the present invention that the solid content X (% by mass) of the toughness-imparting agent (B) based on the dichroic dye-containing liquid and the 100% modulus Y (MPa) of the toughness-imparting agent (B) satisfy relationships represented by the following expressions (1) and (2):

$$0.01 \leq X \leq 1.0 \qquad\qquad (1)$$

$$Y \geq 0.14X^{-1.5} \qquad\qquad (2)$$

When the dichroic dye-containing liquid of the present invention satisfies the relational expressions (1) and (2), occurrence of cracks, which are liable to form in a heat treatment, is suppressed, and the haze is prevented from being increased. In view of this point, the dichroic dye-containing liquid of the present invention preferably satisfies the expression (1) and the following expression (3):

$$Y \geq 1.9X^{-0.94} \qquad\qquad (3)$$

The 100% modulus of the toughness-imparting agent (B) may not be determined unconditionally due to the kind and the content of the toughness-imparting agent (B) and the content thereof in the dichroic dye-containing liquid, and is preferably in a range of 40 MPa or less, and more preferably in a range of from 5 to 25 MPa.

The polarizer of the present invention contains a substrate having provided sequentially thereon an orientation layer and a polarizing layer, and the polarizing layer contains a dichroic dye that is oriented and accumulated by using the dichroic dye-containing liquid.

The structure of the polarizer obtained in the present invention will be described with reference to Fig. 1(E). The polarizer in the present invention has an orientation layer 5 and a polarizing layer 6 on a substrate 1. The polarizing layer 6 is formed by accumulating and orienting a dichroic dye, and in general, a protective layer 7 is provided thereon for fixing the dye. The polarizer in the present invention may have a hardcoat layer 2 and an adhesive layer 3 on the substrate 1, and a functional film 8, such as a water-repellent film, on the protective layer 7, as shown in Fig. 1(E). Preferred examples of the polarizer include a polarizing lens containing a lens substrate as the substrate 1.

The polarizer in the present invention is preferably produced by a method containing the following process steps I to IV.

Process Step I:

An orientation film is formed on a substrate.

Process Step II:

The orientation film, which is formed in the process step I, is polished unidirectionally, thereby forming an orientation layer having unidirectional polished marks.

Process Step III:

A dichroic dye is oriented and accumulated on the orientation layer, which is formed in the process step II, by using the dichroic dye-containing liquid, thereby forming a polarizing layer.

Process Step IV:

A protective layer for fixing the dye is formed on the polarizing layer, which is formed in the process step III.

In the process step I, an orientation film 4 is formed on the substrate (see Fig. 1(A)).

Substrate

The material for the substrate is not particularly limited, and examples thereof include a plastic substrate and an inorganic glass substrate. Examples of the material for the plastic substrate include a methyl methacrylate homopolymer, a copolymer of methyl methacrylate and one or more other monomers, a diethylene glycol bisallylcarbonate homopolymer, a copolymer of diethylene glycol bisallylcarbonate and one or more other monomers, a sulfur-containing copolymer, a halogen copolymer, polycarbonate, polystyrene, polyvinyl chloride, unsaturated polyester, polyethylene terephthalate, polyurethane, polythiourethane, and a polymer derived from a compound having an epithio group. The surface profile of the substrate is not particularly limited and may be an arbitrary shape including a flat shape, a concave shape and a convex shape.

The orientation film formed on the substrate in the process step I is not particularly limited, and examples thereof include an orientation film formed of an inorganic oxide by a known film forming method from a gas phase, such as a chemical vapor deposition (CVD) method, an electron gun vapor deposition method, a plasma vapor deposition (PVD) method and a reactive vapor deposition method, and an orientation film formed by a sol-gel method.

Examples of the inorganic oxide include oxides containing at least one element selected from Si, Al, Zr, Ti, Ge, Sn, Sb, Ta, Nb, V and Y. Among these, SiO or $SiO_2$ are preferred for achieving both the chemical stability and the effect of enhancing the film hardness. The thickness of the orientation film formed of an inorganic oxide is preferably from 0.02 to 5 $\mu$m, and more preferably from 0.05 to 0.5 $\mu$m. When the thickness is 0.02 $\mu$m or more, the orientation film may function as an orientation layer without complete drop-off upon polishing, and when the thickness is 5 $\mu$m or less, occurrence of cracks may be reduced.

In the sol-gel method, an orientation film coating liquid is attached to the substrate to form an orientation film (sol-gel film). The orientation film coating liquid preferably contains (a) an alkoxysilane represented by the following general formula (4) and/or a hexaalkoxydisiloxane represented by the following general formula (5). The component (a) undergoes hydrolysis reaction proceeding in the presence of water, thereby forming a continuous skeleton structure in the film, imparting film curing property, and suppressing the polarizing layer from being dropped off. The orientation film coating liquid may be prepared by mixing other components depending on necessity, such as an inorganic oxide sol, a solvent and a curing catalyst.

$$Si(OR^1)_a(R^2)_{4-a} \qquad (4)$$

$$(R^3O)_3Si\text{-}O\text{-}Si(OR^4)_3 \qquad (5)$$

$R^1$ in the general formula (4) and $R^3$ and $R^4$ in the general formula (5) each represent an alkyl group having from 1 to 5 carbon atoms, which may be any one of linear, branched and cyclic, and examples thereof include a methyl group, an ethyl group, a n-propyl group, an isopropyl group, a n-butyl group, an isobutyl group, a sec-butyl group, a tert-butyl group, a pentyl group and a cyclopentyl group. Among these, a methyl group and an ethyl group are preferred. $R^2$ in the general formula (4) represents an alkyl group having from 1 to 10 carbon atoms, and examples thereof include the examples described for the alkyl group having from 1 to 5 carbon atoms above, a hexyl group, a heptyl group, an octyl group and a 2-ethylhexyl group. Among these, a methyl group, an ethyl group, a propyl group and a butyl group are preferred. Numeral a in the general formula (4) is 3 or 4.

Examples of the tetraalkoxysilane represented by the general formula (4) (wherein a = 4) include tetraethoxysilane (TEOS), tetramethoxysilane, tetraisopropoxysilane, tetra-n-propoxysilane, tetra-n-butoxysilane, tetra-sec-butoxysilane and tetra-tert-butoxysilane.

Examples of the trialkoxysilane represented by the general formula (4) (wherein a = 3) include methyltrimethoxysilane, methyltriethoxysilane, methyltriisopropoxysilane, methyltri-n-propoxysilane, methyltri-n-butoxysilane, methyltri-sec-butoxysilane and methyltri-tert-butoxysilane.

The hexaalkoxydisiloxane represented by the general formula (5) is not particularly limited, and examples thereof include hexamethoxydisiloxane and hexaethoxydisiloxane.

Among these, tetraethoxysilane, tetramethoxysilane, methyltrimethoxysilane, methyltriethoxysilane, tetraisopropoxysilane, methyltriisopropoxysilane, hexaethoxydisiloxane and hexamethoxydisiloxane are preferred, tetraethoxysilane, tetramethoxysilane, methyltrimethoxysilane and methyltriethoxysilane are more preferred, and tetraethoxysilane is further preferred. These compounds may be used solely or as a combination of two or more kinds thereof.

In the present invention, among the silane compounds, the tetraalkoxysilane represented by the general formula (4) (wherein a = 4) is preferably used solely or used in a larger amount than the other silane compounds.

Examples of the orientation film coating liquid used in the present invention include a mixture of the component (a) and an inorganic oxide sol, and in particular, preferred examples thereof include a mixture containing the component (a), (b) water and (c) an alcohol compound, for suppressing drop-off of the polarizing layer.

The preparation method of the orientation film coating liquid is not particularly limited, and the components may be weighed in prescribed amounts and agitated sufficiently. The order of addition of the components is not particularly limited.

In the case where the inorganic oxide sol is used, examples of the inorganic oxide include oxides containing at least one element selected from Mg, Ca, Sr, Ba, Al, In, Ge, Bi, Fe, Cu, Y, Zr, Ni, Ta, Si and Ti. Among these, $SiO_2$, $TiO_2$, $ZrO_2$, $CeO_2$, ZnO, $SnO_2$ and indium tin oxide (ITO) are preferred for preventing drop-off of the polarizing layer and facilitating the production. In particular, silica ($SiO_2$) is preferably used among these for achieving both the chemical stability and the enhancement of the film hardness.

The inorganic oxide sol contains inorganic oxide particles dispersed in a solvent, such as an alcohol, to a solid content of preferably from 0.5 to 70% by mass. The particle diameter of the inorganic oxide particles is preferably from 1 to 100 nm for enhancing the film hardness and preventing the haze (fogging) of the film.

The molar ratio of the component (a) and the solid content in the inorganic oxide sol ((a)/inorganic oxide sol (solid content)) is preferably from 99.9/0.1 to 40/60, more preferably from 90/10 to 45/55, and further preferably from 80/20 to 50/50, for enhancing the adhesiveness to the polarizing layer accumulated on the orientation layer without making the orientation layer excessively cured.

In the case where the orientation film coating liquid is produced as a mixture containing the components (a) to (c), the used amount of water (b) to be added to the system is preferably from 0.5 to 3 molar equivalents, and more preferably from 1 to 2 molar equivalents, based on the component (a). When the amount of water added is 0.5 molar equivalent or more based on the component (a), no alkoxy group may remain during the hydrolysis reaction, and a film having hardness capable of withstanding use as a plastic lens, and when the amount thereof is 3 molar equivalents or less, such a phenomenon may be prevented that excessive curing of the film occurs due to polymerization of the component (a) to increase the size of the single molecule of the polysiloxane formed through curing, which provides a coarse structure of the film, and consequently a film having hardness suitable for a plastic lens may not be obtained.

The method for adding water (b) is not particularly limited, and water may be added in the form of an aqueous solution of an acid or alkali catalyst, which is ordinarily added for accelerating the hydrolysis reaction.

The alcohol compound (c) may be used as a solvent that is soluble in the alkoxysilane and/or the hexaalkoxydisiloxane (a) and water (b).

Example of the alcohol compound (c) include methanol, ethanol, isopropanol, butanol, 2-methoxyethanol, diacetonealcohol and 1-methoxy-2-propanol. Among these, methanol, ethanol and isopropanol are preferred from the standpoint of the solubility of the silane compound and the siloxane compound in the alcohol compound.

The amount of the alcohol compound (c) used is preferably in a range of from 20 to 500% by mass, and more preferably in a range of from 50 to 400% by mass, based on the component (a) . When the amount of the alcohol compound (c) used is 20% by mass or more based on the component (a), the component (a) may be sufficiently dissolved, and when the amount thereof is 500% by mass or less, the reactivity of the component (a) may be maintained.

An amide compound, such as dimethylformamide, and a glycol ether compound, such as propylene glycol monomethyl ether, may be used as a solvent depending on necessity in such a range that does not impair the advantages of the present invention.

The mixture, preferably the mixture containing the components (a) to (c), thus prepared above may be then heat-treated, thereby preparing the orientation film coating liquid through hydrolysis and polycondensation of the alkoxy group in the alkoxysilane material by a sol-gel method.

The temperature of the heat treatment is preferably in a range of from 40 to 120°C, more preferably in a range of from 50 to 110°C, and further preferably in a range of from 70 to 100°C, for performing the hydrolysis reaction sufficiently in such a range that the component (a) is not deposited or gelled.

The heat treatment is preferably performed under stirring while maintaining a temperature that is as high as possible for achieving a sufficient reaction rate, and it is preferred therefor that the mixture containing the components (a) to (c) is refluxed under heating in the heat treatment.

The period of time for the heat treatment is preferably in a range of from 0.5 to 24 hours. The heat treatment is preferably controlled in such a manner that the heating temperature within the aforementioned range is maintained continuously for a prescribed period of time. When the mixture is maintained at a high temperature for a long period of time, there may be a problem of deposition or gelation of the component (a). Accordingly, the period or time for the heat treatment is more preferably from 1 to 15 hours.

The use of the orientation film coating liquid thus prepared in the aforementioned manner may enhance the adhesiveness between the orientation layer and the polarizing layer formed in the later process step, and thus the polarizing layer may be effectively prevented from being dropped off.

For further reducing drop-off and fogging of the polarizing layer, it is preferred that (d) an aluminum chelate may be added depending on necessity to the mixture obtained above, and the mixture is further heat-treated. Examples of the aluminum chelate (d) include aluminum acetylacetonate, ethyl acetoacetate aluminum diisopropylate, aluminum tris(ethyl aectoacetate), alkyl acetoacetate aluminum diisopropylate, aluminum monoacetylacetonate bis(ethyl acetoacetate), aluminum tris(acetylacetonate) and aluminum monoisopropoxy monooleoxyethyl acetylacetonate. These compounds may be used solely or as a mixture of two or more kinds thereof.

The amount of the aluminum chelate (d) used is preferably in a range of from 0.05 to 5% by mass, and more preferably in a range of from 0.1 to 3% by mass, based on the component (a). When the amount of the aluminum chelate (d) used is 0.05% by mass or more based on the component (a), an effect of reducing drop-off and fogging may be imparted, and when the amount thereof is 5% by mass or less, the aluminum content may not be too large, thereby preventing the adhesiveness and the transparency from being deteriorated.

The temperature of the heat treatment after adding the component (d) is preferably in a range of from 40 to 120°C, and more preferably in a range of from 50 to 100°C. The period of time for the heat treatment after adding the component (d) is preferably in a range of from 0.5 to 24 hours. The heat treatment is preferably performed under stirring. The solid content of the orientation film coating liquid is preferably from 0.2 to 20% by mass, and more preferably from 1 to 10% by mass. The solid content of the coating liquid may be controlled within the intended range by using the solvent, such as an alcohol compound, described above. The solid content of the coating liquid may be calculated according to the method described later in examples.

The polarizer of the present invention has an orientation layer formed on the substrate. The orientation layer may be accumulated directly on the substrate, or a hardcoat layer or a primer layer may be provided between the substrate and the orientation layer.

The hardcoat layer provided depending on necessity between the substrate and the orientation layer is not particularly limited, and a known coating composition containing an organosilicon compound and inorganic oxide colloid particles may be used. Examples of the organosilicon compound and the inorganic oxide colloid particles include those described in JP-A-2007-77327, paragraphs (0071) to (0074). The coating composition for the hardcoat layer may be prepared according to a known method.
Examples of the method for forming the hardcoat layer on the substrate include a method of coating the coating composition on the substrate. The coating method may be any of ordinary methods, such as a dip coating method, a spin coating method and a spray coating method, and a dip coating method and a spin coating method are preferred from the standpoint of the surface accuracy.
The primer layer may contain a known resin, such as polyurethane, for enhancing the adhesiveness.

Before attaching the coating liquid to the substrate, the substrate may be subjected to a chemical treatment with an acid, an alkali or an organic solvent, a physical treatment with plasma, an ultraviolet ray or the like, a detergent treatment with a detergent, a sandblast treatment, and a primer treatment with a resin, for enhancing the adhesiveness or the like between the substrate and the orientation layer.

The coating liquid is attached to the substrate by coating on the substrate, followed by subjecting to a heat treatment, thereby favorably providing a sol-gel film. The coating method of the coating liquid is not particularly limited, and known methods, such as spin coating, dip coating, flow coating and spray coating, may be employed. Spin coating is preferred among these from the standpoint of the surface accuracy.
The thickness of the sol-gel film is preferably from 0. 02 to 5 $\mu$m, and more preferably from 0.05 to 0.5 $\mu$m. When the thickness is 0.02 $\mu$m or more, drop-off of the entire film may not occur upon polishing, thereby providing an orientation layer functioning, and when the thickness is 5 $\mu$m or less, formation of cracks may be reduced.
The conditions in the coating and the heat treatment are not particularly limited, and for example, as the coating conditions, the coating time is preferably from 0.5 to 3 minutes. In the case of spin coating, the rotation number of the spin coater is preferably in a range of from 200 to 2,000 rpm. The heat treatment is preferably performed at from 50 to 120°C for from 0.5 to 3 hours.

After completing the process step I and before performing the process step II, the orientation film thus formed in the process step I is preferably immersed in a weak acid or weak alkali aqueous solution. When the orientation film is immersed in a weak acid or weak alkali solution, the adhesiveness between the orientation film and the dye layer is enhanced to prevent drop-off from occurring, and the scratch resistance is increased, thereby preventing the haze due to polishing damage from occurring. The weak acid herein means an acid having a dissociation exponent $pK_a$ of 3.5 or more, and the weak alkali herein means an alkali having a dissociation exponent $pK_b$ of 3.5 or more.
Examples of the weak acid or the weak alkali used for immersion include weak acids, such as acetic acid, oxalic acid, formic acid and benzoic acid, and weak alkalis, such as aqueous ammonia, monoethanolamine, diethanolamine and triethanolamine. The immersing conditions are not particularly limited, and the treating time is preferably from 1 to 30 minutes, and more preferably from 3 to 20 minutes.

In the process step II, for orienting and accumulating the dichroic dye on the orientation layer, the orientation film 4 formed in the process step I is polished unidirectionally, thereby forming an orientation layer 5 having unidirectional polished marks (see Fig. 1(B)). The polishing treatment is preferably performed with an abrasive.

The orientation layer formed on the substrate in the process step II is provided for orienting and accumulating the dichroic dye.

For a liquid crystal, it has been known that a substrate is subjected to a frictional treatment or a polishing treatment in a certain direction, and a liquid crystal is oriented in a direction that has a certain relationship to the direction of the treatment. For example, in the production of a liquid crystal display (LCD), it has been well known that a so-called rubbing treatment is performed, in which an orientation film (such as polyimide) attached to a substrate is rubbed in one direction for orienting a liquid crystal in a cell. The technique of coating a solution containing a dichroic dye on a substrate having been polished in one direction, thereby orienting the dye for utilizing the dichroism thereof is disclosed, for example, in U.S. Patent No. 2,400,877 and U.S. Patent No. 4,865,668.

In the present invention, as similar to the case of a liquid crystal in the production of a liquid crystal display (LCD), the sol-gel film formed on the substrate is polished, thereby orienting the dichroic dye unidirectionally.

The abrasive used for polishing is not particularly limited, and for example, a foamed material, such as polyurethane foam, impregnated with a slurry containing abrasive grains may be used. Examples of the abrasive grains include $Al_2O_3$, $ZrO_2$, $TiO_2$ and $CeO_2$. Among these, $Al_2O_3$ is preferred from the standpoint of the hardness to the sol-gel film formed (e.g., the easiness in polishing and the finish) and the chemical stability. These materials maybe used solely or as a combination of two or more kinds thereof. The slurry containing the abrasive grains may contain a viscosity modifier, a pH modifier and the like.

The average particle diameter of the abrasive grains is preferably 3 $\mu$m or less. The sol-gel film does not have such hardness that is equivalent to a thin film formed of an inorganic substance, and thus may be polished with an abrasive having an average particle diameter of less than 2 $\mu$m. The average particle diameter of the abrasive grains is thus more preferably from 0.5 to 1.5 $\mu$m, and further preferably from 0.7 to 1.4 $\mu$m. The use of finer particles as the abrasive than ordinary ones enables finely-tuned polishing, and thus even in the case where the polishing pressure is increased, or only a certain area is excessively polished, the haze due to polishing damage may be prevented from occurring. Thus, defective products may be reduced to facilitate the production of the polarizer.

The polishing conditions are not particularly limited, and the rotation speed, the polishing pressure, the polishing time and the like may be determined appropriately.

In the process step III, the dichroic dye is oriented and accumulated on the orientation layer 5 having unidirectional polished marks formed in the process step II by using the dichroic dye-containing liquid, thereby forming a polarizing layer 6 (see Fig. 1(C)).

In general, before forming the polarizing layer, the surface of the orientation layer having been polished is completely cleaned and dried. The dichroic dye-containing liquid is then coated on the orientation layer having polished marks, and the dichroic dye is water-insolubilized, thereby forming the polarizing layer.

The coating method of the dichroic dye-containing liquid is not particularly limited, and examples thereof include known methods, such as spin coating, dip coating, flow coating and spray coating.

The water-insolubilization treatment is preferably a method of immersing the dichroic dye coated on the orientation layer into a metal salt aqueous solution. The metal salt that may be used is not particularly limited, and examples thereof include $AlCl_3$, $BaCl_2$, $CdCl_2$, $ZnCl_2$, $FeCl_2$ and $SnCl_2$. Among these, $AlCl_3$ and $ZnCl_2$ are preferred from the standpoint of the safety. After the water-insolubilization treatment, the surface of the dichroic dye may dried.

The thickness of the polarizing layer is not particularly limited, and is preferably in a range of from 0.05 to 0.5 $\mu$m.

In the process step IV, a protective layer 7 for fixing the dye is formed on the polarizing layer 6 formed in the process step III (see Fig. 1(D)).

Examples of the material used for the protective layer include an organosilicon compound, and specific examples. thereof include an amino silane coupling agent, such as N-($\beta$-aminoethyl)-$\gamma$-aminopropyltrimethoxysilane, N-($\beta$-aminoethyl)-$\gamma$-aminopropylmethyldimethoxysilane, N-($\beta$-aminoethyl)-$\gamma$-aminopropylmethyldiethoxysilane, $\gamma$-aminopropylmethyldimethoxysilane, $\gamma$-aminopropylmethyldiethoxysilane, $\gamma$-aminopropyltrimethoxysilane and $\gamma$-aminopropyltriethoxysilane; and an epoxy silane coupling agent, such as $\gamma$-glycidoxypropyltrimethoxysilane ($\gamma$-GPS), $\gamma$-glycidoxypropylmethyldiethoxysilane, $\beta$-(3,4-epoxycyclohexyl)ethyltrimethoxysilane, $\beta$-(3,4-epoxycyclohexyl)ethyltriethoxysilane, $\beta$-(3,4-epoxycyclohexyl)ethyltripropoxysilane, $\beta$-(3,4-epoxycyclohexyl)ethyltributoxysilane, $\gamma$-(3,4-epoxycyclohexyl)propyltrimethoxysilane, $\gamma$-(3,4--epoxycyclohexyl)propyltriethoxysilane, $\delta$-(3,4-epoxycyclohexyl)butyltrimethoxysilane and $\delta$-(3,4-epoxycyclohexyl)butyltriethoxysilane, but the material is not limited thereto. These compounds may be used solely or as a combination of two or more kinds thereof.

The dye protective layer may be formed by coating a liquid containing the organosilicon compound on the polarizing layer by a known method, such as a dipping method, a spin coating method and a spraying method, and then heat-cured to form a film. The heating temperature on heat-curing is preferably in a range of from room temperature (20°C) to 120°C, and the heating time is preferably in a range of from 5 to 180 minutes. On the heat curing, the organosilicon compound permeates the polarizing layer to provide a layer containing the dye protective layer and the polarizing layer that are substantially integrated with each other. In the polarizing layer formed with the dichroic dye-containing liquid of the present invention, cracks are prevented from occurring upon heating in the heat curing. The thickness of the layer containing the dye protective layer and the polarizing layer that are integrated with each other is not particularly limited, and is preferably in a range of from 0.05 to 1.5 $\mu$m.

The resulting polarizer may be provided with a functional film 8, such as a hardcoat film for enhancing the scratch resistance, an antireflection film, a water-repellent film, an UV ray absorbing film, an infrared ray absorbing film, a photochromic film and an antistatic film, by a known method (see Fig. 1(E)).

The polarizer of the present invention prevents cracks from occurring in a heat treatment and suppresses haze without decrease of the adhesiveness of the polarizing layer, and the polarizer may be widely applied to optical purposes, such as an eye glass lens, a sunglass lens, a display device, an optical communication device, and window glass for an automobile and a building, and in particular, is preferably applied to a plastic lens for eyeglasses. The plastic lens for eyeglasses generally has a refractive index of from 1.50 to 1.80 and an Abbe's number of 30 or more.

[Example]

The present invention will be described with reference to examples below, but the present invention is not limited to the examples. The toughness-imparting agents and the resulting polarizers were evaluated for physical propertied in the following manners.

(1) 100% Modulus

The toughness-imparting agent was formed into a film on a glass plate, a PTFE plate or the like and dried at 23°C for 24 hours, thereby providing a film specimen having a thickness of from 100 $\mu$m to 1 mm. The specimen thus produced was subjected to a tensile test, and the stress at 100% deformation in the resulting stress-strain curve was designated as the 100% modulus. The test conditions including the specimen were in accordance with JIS K7127, and the test method was in accordance with JIS K7161.

(2) Transparency (Haze Value)

The polarizer produced was measured for a haze value with Haze Meter HM-150, produced by Murakami Color Research Laboratory Co., Ltd., for determining the presence of fogging.

Evaluation Standard

    A: haze value < 0.5% (fogging little concerned)
    B: 0.5% $\leq$ haze value $\leq$ 1.0% (fogging slightly found but no adverse influence)
    C: 1.0% < haze value (fogging clearly found)

(3) Adhesiveness

The polarizing lenses of Examples and Comparative Examples were evaluated for adhesiveness of the polarizing lens immediately after production and adhesiveness of the polarizing lens after immersing in warm water at 50°C for 24 hours, followed by air-drying. The evaluation method was as follows.

Evaluation Method for Adhesiveness

The polarizing layer was crosscut into 100 squares with a pitch of 1.5 mm. An adhesive tape (Cellotape, produced by Nichiban Co., Ltd.) was strongly adhered to the crosscut portion and then quickly peeled off the adhesive tape, and the number of peeled squares per 100 squares of the cured film was counted. The evaluation standard was as follows.

Evaluation Standard

A: number of peeled squares: 0 to 2/100
B: number of peeled squares: 3 to 5/100
C: number of peeled squares: 6/100 or less

Preparation Example 1

Production of Orientation Film Coating Liquid

40 g of ethanol was added to 85 g of tetraethoxysilane (TEOS) (molecular weight: 208.3, KBE-04, a trade name, produced by Shin-Etsu Chemical Co., Ltd.), followed by stirring. 14.75 g of 0.01 mol/L hydrochloric acid (containing water in twice molar amount of TEOS) was then added thereto under stirring. The mixed liquid was stirred for 5 minutes until the liquid was transparent.
The mixed liquid was charged in a round-bottom flask equipped with a condenser. The flask was heated with a mantle heater, and water at room temperature was run through the condenser, thereby refluxing the mixed liquid under heating for 1 hour. During the refluxing, the liquid was stirred and maintained at a liquid temperature of from 75 to 80°C. Thereafter, the liquid was spontaneously cooled to room temperature over 1 hour, and thus a concentrated orientation film coating liquid was obtained. 30 g of ethanol was added to 5 g of the resulting concentrated orientation film coating liquid for diluting, followed by stirring, thereby providing an orientation film coating liquid (solid component: 2.5% by mass based on the total amount of the coating liquid).
The solid component herein means the stoichiometric amount when the alkoxy group (OR group, R: alkyl group) in the alkoxysilane material was entirely hydrolyzed to form a siloxane bond (Si-O-Si bond).

Example 1

Production of Dichroic Dye-containing Liquid

9.93 g of an approximately 5% by mass aqueous solution of a dichroic dye (Varilight solution 2S, a trade name, produced by Sterling Optics, Inc.) and 0.07 g of a polycarbonate-modified polyurethane resin (Evafanol HA-50C, a trade name, produced by Nicca Chemical Co. Ltd., solid content: 30% by mass) as a toughness-imparting agent were mixed, thereby providing a dichroic dye-containing liquid 1 containing approximately 4.95% by mass of the dichroic dye and 0.2% by mass of the toughness-imparting agent (solid content).

Formation of Orientation Film

On a concave surface of a lens substrate, Phoenix lens (produced by HOYA Corporation, refractive index: 1.53, with hardcoat, diameter: 70 mm, base curve: 4), the orientation film coating liquid obtained in Preparation Example 1 was spin-coated (approximately 2 mL was fed at 800 rpm, maintained for 60 seconds), and cured by subjecting to a heat treatment at 85°C for 1 hour, thereby forming an orientation film (sol-gel film) having a thickness of approximately 100 nm.

Polishing Treatment

The resulting orientation film was subjected to a unidirectional polishing treatment by using an abrasive-containing urethane foam (abrasive: POLIPLA 304M, produced by Fujimi Incorporated, $Al_2O_3$ particles having an average particle diameter of 0.85 $\mu$m, urethane foam having substantially the same shape of the curvature of the concave surface of the spherical lens) under conditions of a rotation number of 350 rpm and a polishing pressure of 50 g/cm$^2$ for 10 seconds, thereby forming an orientation layer. The lens having been subjected to the polishing treatment was rinsed with pure water and dried.

Formation of Polarizing Layer

After drying the lens, from 1 to 5 g of the dichroic dye-containing liquid 1 obtained above was spin-coated on the polished surface, thereby forming a polarizing layer. The spin coating was performed by feeding the dye aqueous solution at a rotation number of 300 rpm, maintaining for 8 seconds, feeding the solution at a rotation number of 400 rpm, maintaining for 45 seconds, feeding the solution at 1,000 rpm, and maintaining for 12 seconds.
An aqueous solution having a iron chloride concentration of 0.15 M, a calcium hydroxide concentration of 0.2 M and pH 3.5 was prepared, and the lens obtained above was immersed in the aqueous solution for approximately 30 seconds, withdrawn therefrom, and sufficiently rinsed with pure water. The water soluble dye was insolubilized by this process.

Formation of Dye Protective Film

Thereafter, the lens was immersed in a 10% by mass γ-aminopropyltriethoxysilane aqueous solution for 15 minutes, then rinsed with pure water three times, and cured at 85°C for 30 minutes. Furthermore, after cooling, the lens was immersed in a 2% by mass γ-glycidoxypropyltrimethoxysilane aqueous solution in the air for 30 minutes, cured in a furnace at 100°C for 30 minutes, and cooled after curing, thereby forming a dye protective layer, and thus a polarizing lens was produced.
The polarizing lens thus obtained was evaluated for the transparency and the adhesiveness. The results are shown in Table 2.

Examples 2 to 19 and Comparative Examples 1 to 3

Dichroic dye-containing liquids 2 to 22 containing the toughness-imparting agents shown in Table 1 were prepared by replacing the toughness-imparting agent used in Example 1 by the toughness-imparting agents shown in Table 1.
The resins used in the examples were as follows.

*1 : Evafanol HA-50C (a trade name, polycarbonate-modified polyurethane resin, produced by Nicca Chemical Co. Ltd., solid content: 35% by mass)
*2 : Neostecker 400 (a trade name, ester/acrylic-modified polyurethane resin, produced by Nicca Chemical Co. Ltd., solid content: 37% by mass)
*3 : Neostecker 700 (a trade name, ester/acrylic-modified polyurethane resin, produced by Nicca Chemical Co. Ltd., solid content: 37% by mass)
*4 : Neostecker 1200 (a trade name, ester/acrylic-modified polyurethane resin, produced by Nicca Chemical Co. Ltd., solid content: 37% by mass)
*5 : Neostecker 1700 (a trade name, ester-modified polyurethane resin, produced by Nicca Chemical Co. Ltd., solid content: 43% by mass)
*6 : Patelacol RBS (a trade name, inorganic hybrid polyurethane resin, produced by DIC Corporation, solid content: 15% by mass)
*7 : Fine Resin SG-2000 (a trade name, carboxyl-modified polyolefin resin, produced by Namariichi Co., Ltd., solid content: 25% by mass)
*8 : Hydran WLS-213 (a trade name, polycarbonate-modified polyurethane resin, produced by DIC Corporation, solid content: 35% by mass)
*9 : Rikabond ET-8 (a trade name, ethylene-acrylic acid copolymer resin, produced by CSC Co. , Ltd., solid content: 22% by mass)
*10 : Evafanol HA-15 (a trade name, ether-modified polyurethane resin, produced by Nicca Chemical Co. Ltd., solid content: 30% by mass)

Polarizing lenses were produced in the same manner as in Example 1 except that the dichroic dye-containing liquid 2 to 22 obtained above were used, and evaluated in the same manner. The results are shown in Table 2.
Table 1

| Dichroic dye-containing liquid | Toughness-imparting agent | | | | Expression (2) satisfied or not A or B |
|---|---|---|---|---|---|
| | Kind | Product name | Addition amount (% by mass)*1 | 100% Modulus (MPa) | |
| 1 | polycarbonate-modified polyurethane | Evafanol HA-50C | 0.2 | 5.0 | A |
| 2 | | Evafanol HA-50C | 0.3 | 5.0 | A |

(continued)

| Dichroic dye-containing liquid | Toughness-imparting agent | | | | Expression (2) satisfied or not A or B |
|---|---|---|---|---|---|
| | Kind | Product name | Addition amount (% by mass)*1 | 100% Modulus (MPa) | |
| 3 | ester/acrylic-modified polyurethane | Neostecker 400 | 0.2 | 4.1 | A |
| 4 | | Neostecker 400 | 0.3 | 4.1 | A |
| 5 | | Neostecker 700 | 0.1 | 7.1 | A |
| 6 | | Neostecker 1200 | 0.2 | 11.3 | A |
| 7 | | Neostecker 1200 | 0.5 | 11.3 | A |
| 8 | | Neostecker 1200 | 1.0 | 11.3 | A |
| 9 | inorganic hybrid polyurethane | Patelacol RBS | 0.2 | 19.8 | A |
| 10 | ester-modified polyurethane | Neostecker 1700 | 0.2 | 30.5 | A |
| 11 | | Neostecker 1700 | 0.5 | 30.5 | A |
| 12 | | Neostecker 1700 | 1.0 | 30.5 | A |
| 13 | carboxyl-modified polyolefin | Fine Resin SG-2000 | 0.1 | 8.8 | A |
| 14 | | Fine Resin SG-2000 | 0.2 | 8.8 | A |
| 15 | | Fine Resin SG-2000 | 0.3 | 8.8 | A |
| 16 | polycarbonate-modified polyurethane | Hydran WLS-213 | 0.2 | 10.1 | A |
| 17 | ethylene-acrylic acid copolymer | Rikabond ET-8 | 0.1 | 8.7 | A |
| 18 | | Rikabond ET-8 | 0.2 | 8.7 | A |
| 19 | ether-modified polyurethane | Evafanol HA-15 | 0.3 | 1.5 | A |
| 20 | | Evafanol HA-15 | 0.1 | 1.5 | B |
| 21 | | Evafanol HA-15 | 0.2 | 1.5 | B |
| 22 | ester/acrylic-modified polyurethane | Neostecker 400 | 0.1 | 4.1 | B |
| *1 : solid content of toughness-imparting- agent (B) based on dichroic dye-containing liquid | | | | | |

Table 2

| | Dichroic dye-containing liquid | Haze | Warm water resistant adhesiveness of polarizing layer |
|---|---|---|---|
| Example 1 | 1 | B | A |

(continued)

|  | Dichroic dye-containing liquid | Haze | Warm water resistant adhesiveness of polarizing layer |
|---|---|---|---|
| Example 2 | 2 | B | A |
| Example 3 | 3 | B | A |
| Example 4 | 4 | B | A |
| Example 5 | 5 | B | A |
| Example 6 | 6 | A | A |
| Example 7 | 7 | A | A |
| Example 8 | 8 | B | A |
| Example 9 | 9 | A | A |
| Example 10 | 10 | A | A |
| Example 11 | 11 | A | A |
| Example 12 | 12 | B | A |
| Example 13 | 13 | B | A |
| Example 14 | 14 | A | A |
| Example 15 | 15 | A | A |
| Example 16 | 16 | A | A |
| Example 17 | 17 | B | A |
| Example 18 | 18 | A | A |
| Example 19 | 19 | B | A |
| Comparative Example 1 | 20 | C | C |
| Comparative Example 2 | 21 | C | C |
| Comparative Example 3 | 22 | C | A |
| Evaluation Standard for Haze<br>A: haze value < 0.5%<br>B : 0.5% $\leq$ haze value $\leq$ 1.0%<br>C: 1.0% < haze value | | | |

[Industrial Applicability]

The polarizer formed by using the dichroic dye-containing liquid of the present invention prevents cracks from occurring in a heat treatment and suppresses haze without decrease of the adhesiveness of the polarizing layer. The polarizer may be widely applied to optical purposes, such as an eye glass lens, a sunglass lens, a display device, an optical communication device, and window glass for an automobile and a building, and in particular, is preferably applied to a plastic lens for eyeglasses.

[Description of Symbols]

1    substrate
2    hardcoat layer
3    adhesive layer
4    orientation film
5    orientation layer
6    polarizing layer (oriented dye layer)

7    dye protective layer (protective layer)

8    functional film (e.g., water-repellent film)

**Claims**

1.   A dichroic dye-containing liquid comprising (A) a dichroic dye and (B) a toughness-imparting agent, the dichroic dye (A) and the toughness-imparting agent (B) being dispersed or dissolved in an aqueous medium, and a solid content X (% by mass) of the toughness-imparting agent (B) based on the dichroic dye-containing liquid and a 100% modulus Y (MPa) of the toughness-imparting agent (B) satisfying relationships represented by the following expressions (1) and (2):

$$0.01 \leq X \leq 1.0 \qquad (1)$$

$$Y \geq 0.14X^{-1.5} \qquad (2)$$

2.   The dichroic dye-containing liquid according to claim 1, wherein the toughness-imparting agent (B) is at least one selected from a silicone-modified acrylic resin, an ethylene-acrylic acid copolymer resin, a carboxyl-modified polyolefin resin, a linear epoxy resin, a polycarbonate-modified polyurethane resin, an ester/acrylic-modifled polyurethane resin, an ether-modified polyurethane resin, an ester-modified polyurethane resin, a polyurethane-series ionomer resin, and an inorganic hybrid polyurethane resin.

3.   A polarizer comprising a substrate having provided sequentially thereon an orientation layer and a polarizing layer, the polarizing layer containing a dichroic dye that is oriented and accumulated by using the dichroic dye-containing liquid according to claim 1 or 2.

[Fig.1]

**INTERNATIONAL SEARCH REPORT**

| International application No. |
| --- |
| PCT/JP2011/057753 |

A. CLASSIFICATION OF SUBJECT MATTER
*C08L101/00*(2006.01)i, *C08K5/00*(2006.01)i, *G02B5/30*(2006.01)i

According to International Patent Classification (IPC) or to both national classification and IPC

B. FIELDS SEARCHED

Minimum documentation searched (classification system followed by classification symbols)
C08L101/00, C08K5/00, G02B5/30

Documentation searched other than minimum documentation to the extent that such documents are included in the fields searched
Jitsuyo Shinan Koho          1922-1996      Jitsuyo Shinan Toroku Koho      1996-2011
Kokai Jitsuyo Shinan Koho    1971-2011      Toroku Jitsuyo Shinan Koho      1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2002-527786 A  (Minnesota Mining and Manufacturing Co.), 27 August 2002 (27.08.2002), paragraph [0029] & US 6245399 B1           & EP 1129372 A & WO 2000/022463 A1     & DE 69914362 T & AU 2867599 A          & TW 552301 B & CN 1322304 A | 1-3 |
| A | JP 2009-180975 A  (Nitto Denko Corp.), 13 August 2009 (13.08.2009), claims; examples & WO 2009/096087 A1 | 1-3 |

☒  Further documents are listed in the continuation of Box C.            ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 April, 2011 (26.04.11) | 17 May, 2011 (17.05.11) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2011/057753

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-25520 A  (Nitto Denko Corp.),<br>05 February 2009 (05.02.2009),<br>paragraph [0047]<br>& US 2010/0009067 A1    & WO 2009/011219 A1<br>& KR 10-2009-0026251 A   & CN 101542338 A | 1-3 |
| A | JP 2009-173861 A  (Toyota Motor Corp.),<br>06 August 2009 (06.08.2009),<br>claims; paragraphs [0016], [0044], [0063]<br>(Family: none) | 1-3 |
| A | JP 2008-527401 A  (Corning Inc.),<br>24 July 2008 (24.07.2008),<br>entire text<br>& US 2006/0146234 A1    & EP 1674898 A1<br>& WO 2006/081006 A2     & DE 602004023743 D<br>& KR 10-2007-0100752 A  & CN 101084111 A<br>& ES 2335408 T | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008527401 A
- US 2400877 A
- JP 2002527786 A
- JP 2007077327 A
- US 4865668 A